# EUROPÄISCHE PATENTANMELDUNG

(11) **EP 4 485 725 A2**
(43) Veröffentlichungstag der Anmeldung: **01.01.2025**
(21) Anmeldenummer: 24213080.5
(22) Anmeldetag: 15.03.2022
(51) Int. Cl.: H02G 13/00

(54) **KONTAKTSYSTEM UND BAUGRUPPE**

(30) Priorität: 17.03.2021 DE 102021106565
(62) Teilanmeldung aus: 22162218.6
(71) Anmelder: DEHN SE, 92318 Neumarkt i.d. OPf. (DE)
(72) Erfinder: Wildfeuer, Sabine, 92318 Neumarkt i.d.OPf. (DE); Rother, Claudia, 92318 Neumarkt i.d.OPf. (DE); Hannig, Martin, 92318 Neumarkt i.d.OPf. (DE); Seger, Siegfried, 92318 Neumarkt i.d.OPf. (DE)
(74) Vertreter: Prinz & Partner mbB

(57) **Zusammenfassung**

Ein Kontaktsystem (14) zur elektrischen Kontaktierung eines Leiters (16) mit einer Potentialausgleichsschiene (12) hat einen elektrisch leitfähigen Kontaktkörper (22), und eine Befestigungsvorrichtung (20), die an der Potentialausgleichsschiene (12) befestigbar und dazu ausgebildet ist, den Leiter (16, 74) am Kontaktkörper (22) kraftschlüssig zu fixieren. Der Kontaktkörper (22) umfasst eine erste Kontaktseite (34) mit einem ersten flächigen Kontaktbereich (36) und eine zweite Kontaktseite (38) mit einem zweiten flächigen Kontaktbereich (40) aufweist, wobei der Kontaktkörper (22) über den ersten flächigen Kontaktbereich (36, 40) mit dem Leiter (16, 74) und über den zweiten flächigen Kontaktbereich (36, 40) mit der Potentialausgleichsschiene (12) kontaktierbar ist. Der Kontaktkörper hat zudem einen Randbereich (42), der sich vom ersten Kontaktbereich (36) zum zweiten Kontaktbereich (40) erstreckt, und eine Rundung (44) aufweist. Ferner ist eine Baugruppe umfassend eine Potentialausgleichsschiene und ein Kontaktsystem gezeigt.

## Beschreibung

Die Erfindung betrifft ein Kontaktsystem zur elektrischen Kontaktierung eines Leiters mit einer Potentialausgleichsschiene sowie eine Baugruppe mit einem solchen Kontaktsystem.

Potentialausgleichsschienen werden für den Schutz und Funktionspotentialausgleich vorgesehen, beispielsweise im Bereich des Blitzschutzes. Dabei sind die Potentialausgleichsschienen Bestandteil der jeweiligen Elektroinstallation, insbesondere Bestandteil des inneren und äußeren Blitzschutzes eines Gebäudes.

Um elektrische Leiter an eine Potentialausgleichsschiene anzuschließen werden üblicherweise Kontaktsysteme verwendet, die den Leiter an der Potentialausgleichsschiene fixieren und gleichzeitig den elektrischen Kontakt zwischen dem Leiter und der Potentialausgleichsschiene herstellen.

Für spezielle Anwendungsfälle werden zündfunkenfreie Potentialausgleichsschienen benötigt. Bei diesen speziellen Potentialausgleichsschienen vermeiden die Kontaktsysteme, dass Funken entstehen. Insofern stellen die Kontaktsysteme einen sogenannten zündfunkenfreien Potentialausgleich bereit.

Funken entstehen durch Luftspalte, die zwischen dem Leiter und der Potentialausgleichsschiene vorhanden sind. Um solche Spalte zu vermeiden, sind aus dem Stand der Technik daher Kontaktsysteme bekannt, die den jeweiligen Leiter mit einer hohen Druckkraft gegen die Potentialausgleichsschiene pressen. Auf diese Weise werden zwar Luftspalte vermieden, allerdings kann dies dazu führen, dass der Leiter sich durchbiegt.

Insbesondere in explosionsgefährdeten Bereichen (Ex-Bereiche) bestehen besondere Anforderungen an die Kontaktsysteme hinsichtlich des zündfunkenfreien Potentialausgleichs.

Daher ist es unter anderem bekannt, den Leiter und die Potentialausgleichsvorrichtung im Kontaktbereich abzudichten. Auf diese Weise entstehen Funken nur in einem begrenzten bzw. definierten Raum und können nicht in die Umgebung außerhalb der Abdichtung gelangen. Zudem kann durch die Abdichtung keine explosionsgefährdete Atmosphäre an die Kontaktstelle gelangen.

Die bekannten Systeme erfordern aber einen hohen Aufwand, um die gewünschte Kontaktierung zu gewährleisten.

Aus der DE 21 41 550 B1 ist ein Kontaktierungssystem mit einem ringförmigen Kontaktelement zur Kontaktierung von zwei Flachleitern bekannt, bei dem eine Schrauben-Mutter-Verbindung zur Klemmung verwendet wird.

In der DE 468 948 C ist ein Kontaktierungssystem bekannt, bei dem ein Gewindebolzen mit zwei Muttern vorgesehen ist, denen jeweils eine Unterlegscheibe zugeordnet ist.

Die US 2018/0358730 A1 zeigt eine Befestigungsstruktur aus einem Gummi, um Leiter zu verbinden.

Aus der DE 10 2014 209 259 A1 ist eine Kontaktdichtungsscheibe bekannt, die eine elektrisch leitfähige Kreisringscheibe umfasst.

Die FR 3 096 840 A1 zeigt ebenfalls eine Schraubverbindung von zwei Leitern.

Aus der CN 204 992 002 U ist ein Leitungsabschluss bekannt, in den Litzen einer Leitung eingeführt und mittels einer Schraube geklemmt werden.

Die Aufgabe der Erfindung ist es daher, die elektrische Kontaktierung mit der Potentialausgleichsschiene zu verbessern.

Die Aufgabe wird erfindungsgemäß gelöst durch ein Kontaktsystem zur elektrischen Kontaktierung eines Leiters mit einer Potentialausgleichsschiene, das einen elektrisch leitfähigen Kontaktkörper und eine Befestigungsvorrichtung hat. Die Befestigungsvorrichtung ist an der Potentialausgleichsschiene befestigbar und dazu ausgebildet, den Leiter am Kontaktkörper kraftschlüssig zu fixieren. Dabei weist der Kontaktkörper eine erste Kontaktseite mit einem ersten flächigen Kontaktbereich und eine zweite Kontaktseite mit einem zweiten flächigen Kontaktbereich auf. Die beiden Kontaktseiten sind entgegengesetzt zueinander. Der Kontaktkörper ist über den ersten flächigen Kontaktbereich mit dem Leiter und über den zweiten flächigen Kontaktbereich mit der Potentialausgleichsschiene kontaktierbar. Der Kontaktkörper hat zudem einen Randbereich, der sich vom ersten Kontaktbereich zum zweiten Kontaktbereich erstreckt, und eine Rundung aufweist. Das Kontaktsystem weist ein Gehäuse auf, in dem der Kontaktkörper angeordnet ist, wobei das Gehäuse im Bereich der Kontaktbereiche offen ist, sodass die Kontaktbereiche frei zugänglich sind.

Am Gehäuse, insbesondere am oberen Gehäuseteil, sind wenigstens zwei Führungselemente vorgesehen, die den Flachleiter oder den Adapter relativ zum Kontaktkörper positionieren. Auf diese Weise wird auch der Leiter exakt relativ zum Kontaktkörper positioniert. Alternativ oder ergänzend ist am Gehäuse, insbesondere am unteren Gehäuseteil, eine Positioniervorrichtung ausgebildet, über die das Gehäuse auf der Potentialausgleichsschiene positionierbar ist. Dabei ist das Gehäuse in zwei unterschiedlichen Orientierungen an der Potentialausgleichsschiene anordbar. Die unterschiedlichen Orientierungen dienen zur elektrischen Anbindung von Leitern mit unterschiedlichen Querschnitten. Auf diese Weise wird die Flexibilität in der Anbringung des Leiters an der Potentialausgleichsschiene erhöht.

Die Aufgabe der Erfindung wird ferner gelöst durch eine Baugruppe umfassend eine Potentialausgleichsschiene und ein zuvor beschriebenes Kontaktsystem.

Der Grundgedanke der Erfindung besteht darin, den Leiter und die Potentialausgleichsschiene über ein Zwischenelement, nämlich den Kontaktkörper, elektrisch miteinander zu kontaktieren. Durch die flächigen Kontaktbereiche, die insbesondere plan ausgebildet sind, stellt der Kontaktkörper einen guten elektrischen Kontakt zwischen dem Leiter und dem Kontaktkörper sowie zwischen dem Kontaktkörper und der Potentialausgleichsschiene sicher. Dabei ist der Leiter durch den Kontaktkörper beabstandet zur Potentialausgleichsschiene, sodass der Abstand von Kanten des Leiters zur Potentialausgleichsschiene vergrößert ist. Zudem werden Kanten im Kontaktbereich der Komponenten durch die Rundung des Randbereichs vermieden, wodurch die elektrische Kontaktierung zündfunkenfrei hergestellt werden kann, insbesondere in einem dichtungsfreien Zustand, also ohne zusätzlich eingebrachte Dichtung. Der Leiter kann daher auch mit einem geringeren Aufwand und einer geringeren Montagekraft befestigt werden, sodass die Befestigung des Leiters an der Potentialausgleichsschiene vereinfacht ist.

Dabei wird der elektrische Kontakt zwischen der Potentialschiene und dem Kontaktkörper sowie zwischen dem Kontaktkörper und dem Leiter jeweils durch einen direkten Kontakt der entsprechenden Oberflächen an dem Leiter, der Potentialausgleichsschiene bzw. dem Kontaktkörper gebildet. Mit anderen Worten wird dort jeweils ein Flächenkontakt hergestellt.

Aufgrund des elektrisch leitfähigen Kontaktkörpers, der die entsprechende Kontaktierung sicherstellt, kann die Baugruppe in explosionsgefährdeten Bereichen (Ex-Bereichen) eingesetzt werden.

Durch die Rundung des Randbereichs kann es sich bei dem Kontaktköper um einen, insbesondere im Wesentlichen, scheibenförmigen Kontaktkörper handeln. Demnach weist der Kontaktkörper senkrecht zur Mittelachse eine Rundung auf. Mit anderen Worten kann es sich bei dem Kontaktkörper um einen kreisrunden Zylinder handeln.

Die Rundung kann sich (zusätzlich oder alternativ) entlang der Mittelachse des Kontaktkörpers erstrecken, sodass der Randbereich des Kontaktkörpers entlang der Mittelachse die Rundung aufweist bzw. in einer zur Mittelachse parallelen Richtung abgerundet ist, insbesondere im Querschnitt entlang der Mittelachse halbkreisförmig.

Es kann sich bei dem Kontaktkörper um einen Tonnenkörper handeln, insbesondere einen Kreistonnenkörper. Demnach weist der Randbereich eine Rundung in zwei senkrechten Richtungen auf, beispielsweise in horizontaler Richtung sowie in vertikaler Richtung. Hierdurch ergibt sich die Tonnenform des Kontaktkörpers.

Der Kontaktkörper kann im Gehäuse aufgenommen sein, sodass dieser teilweise vom Gehäuse umgeben ist. Dabei ist der Kontaktkörper mittels des Gehäuses auf der Potentialausgleichsschiene positionierbar. Insofern ist das Gehäuse entsprechend der Potentialausgleichsschiene dimensioniert. Durch das Gehäuse wird also das Montieren des Leiters an der Potentialausgleichsschiene vereinfacht. Es wird zunächst der Kontaktkörper über das Gehäuse auf der Potentialausgleichsschiene positioniert und anschließend wird der Leiter auf das Gehäuse, im Bereich der Kontaktflächen aufgelegt und am Gehäuse fixiert.

Durch die zweite Orientierung ist nicht die um 180° gedrehte Orientierung der ersten Orientierung gemeint, sondern eine von dieser verschiedene.

Beispielsweise sind die zwei Orientierungen um 90° zueinander versetzt.

Mit anderen Worten kann in der ersten Orientierung ein Leiter mit einem ersten Querschnitt elektrisch mit der Potentialausgleichsschiene kontaktiert werden und in der zweiten Orientierung ein Leiter mit einem zweiten Querschnitt an die Potentialausgleichsschiene angebunden werden. Somit gewährt das Kontaktsystem eine hohe Flexibilität bei der Anbindung von Leitern.

Beispielsweise ist die erste Orientierung für einen Flachleiter mit einer Breite von 40 mm ausgestaltet und die zweite Orientierung für einen Flachleiter mit einer Breite von 30 mm.

Es ist denkbar, dass die Positioniervorrichtung Rasthaken sind, die sich von einer Seite des Gehäuses wegerstrecken, insbesondere von einer Unterseite des unteren Gehäuseteils, das der Potentialausgleichsschiene zugeordnet ist.

Ein Aspekt der Erfindung sieht vor, dass der Randbereich die Mantelfläche des im Wesentlichen zylindrischen Kontaktkörpers bildet. Alternativ oder ergänzend kann eine nach außen weisende Fläche des Randbereichs konvex ausgebildet sein. Auf diese Weise fließt der Strom von der einen Kontaktfläche zur anderen Kontaktfläche vor allem durch das Innere des Kontaktkörpers, also insbesondere nicht über den Randbereich, der die Rundung aufweist. Durch die Geometrie wird effektiv vermieden, dass Funken entstehen.

Alternativ kann sich die Rundung auch, bezogen auf die Mittelachse des Kontaktkörpers, radial nach innen erstrecken. In diesem Fall ist die nach außen weisende Fläche des Randbereichs konkav ausgebildet.

Grundsätzlich kann sich die Rundung bzw. der durch die Rundung entstehende abgerundete Bereich von einem ersten Punkt zu einem zweiten Punkt erstrecken, die auf einer Achse liegen, die parallel zur Mittelachse des Kontaktkörpers ist. Die nach außen weisende Fläche des Randbereichs kann dabei konvex oder konkav sein.

Der Kontaktkörper kann in Bezug auf seine Mittelachse rotationssymmetrisch ausgebildet sein. Insofern stellt die Mittelachse des Kontaktkörpers eine Symmetrieachse dar. Auf diese Weise ist die relative Orientierung des Kontaktkörpers an der Potentialausgleichsschiene in Bezug zu seiner Symmetrieachse unerheblich. Der Kontaktkörper kann also auch um 180° gedreht in Bezug zu seiner Symmetrieachse an der Potentialausgleichschiene angeordnet werden. Dies vereinfacht die Montage, da auf keine spezielle Orientierung des Kontaktkörpers an der Potentialausgleichsschiene geachtet werden muss.

In einer Ausgestaltung der Erfindung weist der Kontaktkörper eine Basis und den Randbereich auf, der ringförmig ausgebildet ist und die Basis in radialer Richtung vollständig aufnimmt. Dabei sind an der Basis der erste Kontaktbereich und der zweite Kontaktbereich vorgesehen. Durch die Ausformung der Basis und des Randbereichs kann somit der Stromfluss durch den Kontaktkörper beeinflusst werden. Insbesondere weist der Kontaktkörper zwei entgegengesetzte Seiten auf, an denen die Basis kontaktierbar ist, wobei diese beiden Seiten die entsprechenden Kontaktbereiche des Kontaktkörpers aufweisen. Demnach erfolgt die elektrische Kontaktierung über die Basis des Kontaktkörpers.

Insbesondere ist der Kontaktkörper zweiteilig ausgebildet. Demnach sind die Basis und der ringförmige Randbereich separat zueinander ausgebildet, wobei sie zusammengesetzt werden, um den Kontaktkörper auszubilden.

Um einen Stromfluss vor allem über die Basis des Kontaktkörpers, also über das Innere des Kontaktkörpers zu führen, kann der Randbereich aus einem Material sein, das eine geringere elektrische Leitfähigkeit aufweist als die Basis des Kontaktkörpers.

Beispielsweise ist der Randbereich aus Edelstahl und die Basis aus Kupfer.

Im Allgemeinen ist es auch denkbar, dass sich die elektrische Leitfähigkeit des Randbereichs entlang des Radius verändert, insbesondere nach radial außen abnimmt, sodass kein Sprung der elektrischen Leitfähigkeit im Übergangsbereich zwischen der Basis und des Randbereichs vorliegt.

Grundsätzlich kann der Kontaktkörper so ausgebildet sein, dass eine Nut oder Vertiefung zwischen den Kontaktbereichen und dem Randbereich ausgebildet ist, wodurch eine zumindest oberflächliche Trennung dieser Bereiche gegeben ist.

Der Kontaktkörper kann auch dreiteilig ausgebildet sein. Beispielsweise weist der Kontaktkörper einen ringförmigen Bereich zwischen der Basis und dem Randbereich auf.

In einer Ausführungsform weist die Befestigungsvorrichtung einen Bügel auf, der Befestigungsöffnungen hat, über die der Bügel an der Potentialausgleichsschiene befestigbar ist. Damit wird der Leiter am Kontaktkörper und gleichzeitig der Kontaktkörper kraftschlüssig an der Potentialausgleichschiene befestigt. Der Bügel hat mittig einen Beaufschlagungsbereich, über den der Leiter am ersten Kontaktbereich fixierbar ist.

Der Bügel kann den Leiter auf den Kontaktkörper drücken, um einen Kontakt zwischen dem Leiter und dem Kontaktkörper sicherzustellen. Dies findet dann statt, wenn der Bügel der Befestigungsvorrichtung befestigt wird, insbesondere an der Potentialausgleichsschiene. Gleichzeitig kann der Bügel über den Leiter den Kontaktkörper fixieren, insbesondere an der Potentialausgleichsschiene, indem der Kontaktkörper indirekt auf die Potentialausgleichsschiene gedrückt wird.

Beispielsweise ist der Bügel (im Wesentlichen) plattenartig, wobei der Beaufschlagungsbereich durch eine Auswölbung gebildet ist, sodass der Beaufschlagungsbereich in einer anderen Ebene als die Befestigungsöffnungen liegt. Auf diese Weise wird eine einfache und kostengünstige Befestigungsvorrichtung bereitgestellt, die sicherstellt, dass der Leiter sicher fixiert ist. Der Bügel kann aus einem Metall sein.

In einer Ausgestaltung der Erfindung ist das Kontaktsystem ausgebildet, einen Flachleiter elektrisch mit der Potentialausgleichsschiene zu kontaktieren, und hat einen Adapter für Rundleiter. Dabei weist der Adapter eine Aufnahme für den Rundleiter auf, in die der Rundleiter einsetzbar und befestigbar ist. Der Adapter hat einen im Querschnitt rechteckigen Kontaktierungsbereich, der mittels der Befestigungsvorrichtung mit dem Kontaktkörper koppelbar ist. Somit kann das Kontaktsystem grundsätzlich für viele verschiedene Leiter eingesetzt werden, da Flachleiter direkt und Rundleiter mittels des Adapters entsprechend kontaktiert werden können.

Die Aufnahme kann im Querschnitt kreisförmig sein, sodass sich der Rundleiter sicher aufnehmen lässt.

Die Aufnahme kann eine Öffnung an einer Stirnseite aufweisen, die senkrecht zu wenigstens einer Fixierungsöffnung ist, über die ein Fixierungsmittel für den Rundleiter eingesetzt ist. Das Fixierungsmittel ragt in eine Aufnahmekammer hinein, wobei der Rundleiter über das Fixierungsmittel in der Aufnahme fixierbar ist. Somit wirkt das Fixierungsmittel auf den Rundleiter senkrecht zur Einsteckrichtung des Rundleiters. Das Fixierungsmittel stellt sicher, dass der Rundleiter sicher im Adapter aufgenommen ist, insbesondere innerhalb der Aufnahmekammer.

Grundsätzlich können mehrere Fixierungsöffnungen und entsprechend mehrere Fixierungsmittel vorgesehen sein. Beispielsweise ist das Fixierungsmittel eine Schraube.

Um eine Ausbreitung von Funken aus der Aufnahme heraus zu vermeiden, kann in der Aufnahme ein elektrisch nicht leitfähiger, poröser Einsatz angeordnet sein, der eine an den Querschnitt des Rundleiters angepasste Durchgangsöffnung hat. Der Einsatz kann in die Aufnahme eingesetzt sein, wodurch eine Querschnittsverengung erfolgt. Hierdurch kann ferner sichergestellt werden, dass der Rundleiter sicher aufgenommen ist.

Zum Beispiel ist der Einsatz ein poröser Kunststoff, wie ein offenporiger Kunststoff.

In einer Ausgestaltung der Erfindung weist der Adapter eine Abschlusskappe auf, die werkzeugfrei lösbar an der Aufnahme des Adapters befestigt ist. Die Abschlusskappe hat eine an den Querschnitt des Rundleiters angepasste Einstecköffnung. Durch die Abschlusskappe wird ein Eindringen von Schmutz oder Staub in die Aufnahme verhindert.

Dabei kann die Abschlusskappe zusätzliche Belüftungsöffnungen aufweisen, die den Wärmetransport auf der Aufnahme heraus verbessern.

Um eine schnelle Befestigung der Abschlusskappe zu ermöglichen, kann die Abschlusskappe mit einer Rastverbindung am Adapter befestigt sein, insbesondere im Bereich der Aufnahme des Adapters, also an der Stirnseite.

Hierfür sind an der Abschlusskappe beispielsweise Rasthaken und an der Aufnahme ein entsprechender Hinterschnitt ausgebildet, in den die Rasthaken eingreifen.

Innerhalb des Gehäuses kann ein Hohlraum ausgebildet sein, in den der Kontaktkörper aufgenommen bzw. eingesetzt ist, wobei der Kontaktkörper über seinen Randbereich verliersicher und positionsgetreu im Gehäuse gehalten ist.

Der Kontaktkörper wird also an einer vorbestimmten Position relativ zur Potentialausgleichsschiene angeordnet. Somit wird ein guter Kontakt zwischen der Potentialausgleichsschiene und dem Kontaktkörper sichergestellt.

Beispielsweise sind hierfür am Gehäuse Haltemittel vorgesehen, die am Kontaktkörper im Randbereich angreifen und den Kontaktkörper im Gehäuse fixieren.

Es ist denkbar, dass in den Hohlraum zusätzlich ein elektrisch nicht leitfähiger, poröser Einsatz eingelegt ist. Beispielsweise ist der Einsatz aus einem offenporigen Kunststoff.

Das Gehäuse kann mehrteilig ausgebildet sein und ein oberes Gehäuseteil und ein unteres Gehäuseteil aufweisen. Auf diese Weise wird das Einsetzen des Kontaktkörpers in das Gehäuse vereinfacht, da der Kontaktkörper zunächst in eines der beiden Gehäuseteil, insbesondere das untere Gehäuseteil, eingesetzt wird. Anschließend wird das andere Gehäuseteil, insbesondere das obere Gehäuseteil, deckelartig aufgesetzt, sodass der Kontaktkörper im Gehäuse aufgenommen ist.

Es ist denkbar, dass das Gehäuse nur aus dem oberen und unteren Gehäuseteil besteht. Dementsprechend weist das Gehäuse einen einfachen Aufbau auf.

Ebenso kann das Gehäuse im Bereich des Hohlraums eine federnde Aufnahme aufweisen, über die der Kontaktkörper, insbesondere verliersicher, im Gehäuse aufgenommen wird.

Um eine einfache Montage des Leiters zu ermöglichen, kann das untere Gehäuseteil, in dem an der Potentialausgleichsschiene positionierten Zustand entlang der Potentialausgleichsschiene bewegbar sein. Das Gehäuse wird dann auch mittels der Befestigungsvorrichtung an der Potentialausgleichsschiene kraftschlüssig fixiert. Dies geschieht dadurch, dass die Befestigungsvorrichtung den Leiter auf den Kontaktkörper und optional auch teilweise das Gehäuse drückt, wodurch beide in Richtung der Potentialausgleichsschiene gedrückt werden. Der Kontaktkörper überträgt wiederum die aufgebrachte Kraft teilweise auf das Gehäuse, insbesondere das untere Gehäuseteil, sodass das Gehäuse mittels der Befestigungsvorrichtung an der Potentialausgleichsschiene kraftschlüssig fixiert ist.

Dabei können die Führungselemente derart voneinander beabstandet sein, dass Flachleiter oder Adapter mit verschiedenen Breiten aufnehmbar sind. Auf diese Weise wird ein Kontaktsystem mit einer hohen Flexibilität in der Anbringung von Leitern bereitgestellt.

Beispielsweise weisen benachbarte Führungselemente verschiedene Abstände zueinander auf. Über die unterschiedlichen Abstände lassen sich die entsprechenden Orientierungen gewährleisten, die zur Aufnahme von Leitern unterschiedlicher Breiter vorgesehen sind. Mit anderen Worten sind zwei benachbarte Führungselemente derart voneinander beabstandet, dass ein Flachleiter mit einer ersten Breite, beispielsweise einer Breite von 40 mm, geführt eingesetzt werden kann, wohingegen zwei andere benachbarte Führungselemente derart voneinander beabstandet sind, dass ein Flachleiter mit einer ersten Breite, beispielsweise einer Breite von 30 mm, geführt eingesetzt werden kann. Unter geführt eingesetzt ist dabei zu verstehen, dass der Flachleiter entweder an den Führungselementen anliegt oder einen Abstand von weniger als 5 mm zu den Führungselementen aufweist, insbesondere weniger als 2 mm.

Insbesondere sind insgesamt vier Führungselemente vorgesehen, die den Ecken des Gehäuses zugeordnet sind.

Jedes Führungselement weist eine erste Anlagefläche und eine zweite Anlagefläche auf, die im rechten Winkel zueinander angeordnet sind. Insofern sind die Führungselemente in Draufsicht im Wesentlichen L-förmig ausgebildet.

Die Führungselemente sind dabei so am Gehäuse angeordnet, dass sich erste Anlageflächen benachbarter Führungselemente und zweite Anlageflächen benachbarter Führungselemente jeweils gegenüberliegen, um entsprechende Führungen für die jeweiligen Leiter auszubilden. Die ersten Anlageflächen weisen jeweils einen ersten Abstand zueinander auf, der unterschiedlich zu einem zweiten Abstand ist, den die zweiten Anlageflächen jeweils zueinander aufweisen.

Weitere Merkmale und Vorteile der Erfindung ergeben sich aus der nachfolgenden Beschreibung sowie aus den beigefügten Zeichnungen, auf die im Folgenden Bezug genommen wird. In den Zeichnungen zeigen:
- Figur 1 eine perspektivische Explosionsansicht einer erfindungsgemäßen Baugruppe mit einem erfindungsgemäßen Kontaktsystem gemäß einer ersten Ausführungsform,
- Figur 2 eine Längsschnittansicht der Baugruppe gemäß Figur 1 im zusammengebauten Zustand entlang der Schnittlinie II-II in Figur 1,
- Figur 3 eine Längsschnittansicht gemäß Figur 2 der Baugruppe mit einem Kontaktsystem gemäß einer zweiten Ausführungsform,
- Figur 4 eine perspektivische Ansicht einer erfindungsgemäßen Baugruppe mit einem erfindungsgemäßen Kontaktsystem gemäß einer dritten Ausführungsform,
- Figur 5 eine perspektivische Explosionsansicht der Baugruppe der Figur 4,
- Figur 6 eine Längsschnittansicht der Baugruppe gemäß der Figuren 4 und 5 entlang der Schnittlinie VI-VI in Figur 4,
- Figuren 7 und 8 unterschiedliche Orientierungen des erfindungsgemäßen Kontaktsystems der Figuren 4 bis 6 an einer Potentialausgleichsschiene,
- Figur 9 eine weitere Ausgestaltung eines Gehäuses des erfindungsgemäßen Kontaktsystems,
- Figur 10 eine perspektivische Ansicht einer erfindungsgemäßen Baugruppe mit einem erfindungsgemäßen Kontaktsystem gemäß einer vierten Ausführungsform,
- Figur 11 einen Adapter des erfindungsgemäßen Kontaktsystems der Figur 10 in einer perspektivischen Ansicht,
- Figur 12 eine perspektivische Explosionsansicht des Adapters der Figur 11,
- Figur 13 eine weitere Ausgestaltung eines Kontaktkörpers des erfindungsgemäßen Kontaktsystems in einer perspektivischen Teilschnittansicht, und
- Figur 14 eine Detailansicht des Details A aus der Figur 13.

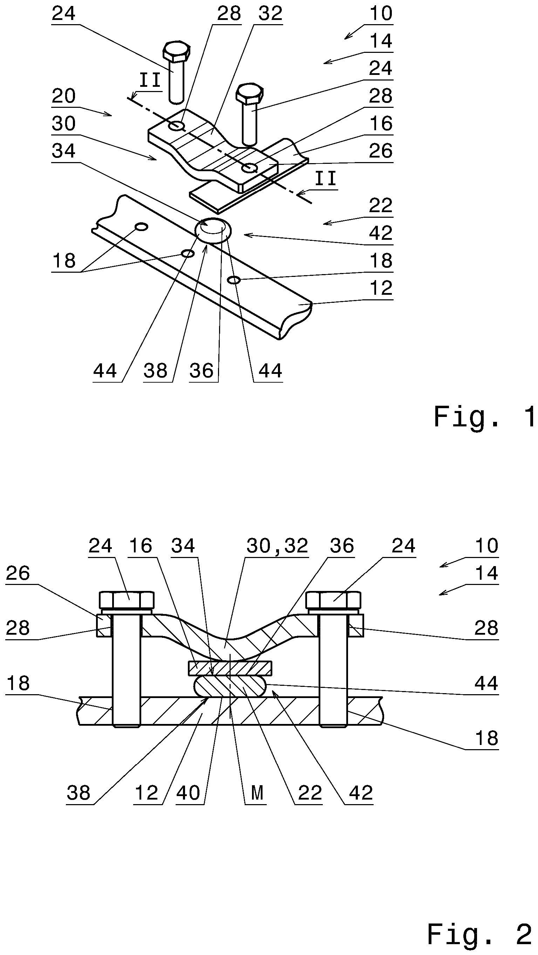

Figur 1 zeigt eine Baugruppe 10, die eine Potentialausgleichsschiene 12 und ein Kontaktsystem 14 aufweist. Über das Kontaktsystem 14 kann ein Leiter, beispielsweise ein Flachleiter 16, mit der Potentialausgleichsschiene 12 elektrisch verbunden und an der Potentialausgleichsschiene 12 mechanisch fixiert werden.

Das Kontaktsystem 14 dient also der elektrischen Anbindung des Flachleiters 16 an die Potentialausgleichsschiene 12 sowie dessen mechanischen Fixierung.

In der Potentialausgleichsschiene 12 sind mehrere Befestigungsöffnungen 18 ausgebildet, die einen definierten Abstand zueinander aufweisen. Über die Befestigungsöffnungen 18 lassen sich grundsätzlich verschiedene, elektrisch zu kontaktierende Komponenten, beispielsweise mittels des Kontaktsystems 14, befestigen.

Entsprechend ist die Potentialausgleichsschiene 12 elektrisch leitend und beispielsweise aus einem Metall ausgebildet, wie Kupfer oder einem rostfreien Stahl.

Das Kontaktsystem 14 weist eine Befestigungsvorrichtung 20, die in den Befestigungsöffnungen 18 der Potentialausgleichsschiene 12 befestigbar ist, und einen elektrisch leitfähigen Kontaktkörper 22 auf.

In der Ausgestaltung der Figuren 1 umfasst die Befestigungsvorrichtung 20 Befestigungsmittel in Form von Schrauben 24 sowie einen Bügel 26, insbesondere einen metallischen, elektrisch leitfähigen Bügel 26. Alternativ zu den Schrauben 24 können die Befestigungsmittel auch durch Bolzen oder ähnliches ausgebildet sein.

Der Bügel 26 ist im Wesentlichen plattenförmig ausgebildet, d. h. er weist eine geringere Dicke als Ausdehnung in Länge und Breite auf, und hat an zwei entgegensetzten Enden jeweils eine Befestigungsöffnung 28, die an die Befestigungsmittel bzw. die Schrauben 24 angepasst ist.

Genauer gesagt weisen die Befestigungsöffnungen 28 des Bügels 26 den gleichen Durchmesser wie die Befestigungsöffnungen 18 der Potentialausgleichsschiene 12 auf, sodass der Bügel 26 mittels der Schrauben 24 an der Potentialausgleichsschiene 12 befestigt werden kann (siehe Figur 2).

Zum Beispiel handelt es sich bei den Schrauben 24 um M10-Schrauben, wobei die Befestigungsöffnungen 18 der Potentialausgleichsschiene 12 entsprechend mit einem M10-lnnengewinde ausgebildet sind.

Zwischen den Befestigungsöffnungen 28 ist mittig am Bügel 26 ein Beaufschlagungsbereich 30 ausgebildet.

Genauer gesagt ist der Beaufschlagungsbereich 30 eine Auswölbung 32 des im Wesentlichen plattenförmigen Bügels 26, die sich im befestigten Zustand des Bügels 26 in Richtung der Potentialausgleichsschiene 12 wölbt (Figur 2). Insofern liegt eine am Beaufschlagungsbereich 30 vorgesehene Beaufschlagungsfläche aufgrund der Auswölbung 32 in einer anderen Ebene als die Befestigungsöffnungen 28 des Bügels 26.

Über den derart ausgestalteten Beaufschlagungsbereich 30 kann eine entsprechend gute elektrische Kontaktierung und gleichzeitig mechanische Fixierung des Leiters sichergestellt werden.

Der Kontaktkörper 22 ist in der gezeigten Ausführungsform als ein Tonnenkörper ausgebildet, insbesondere als ein Kreistonnenkörper, wobei die Höhe geringer ist als der Durchmesser der Grundfläche.

Genauer gesagt hat der Kontaktkörper 22 eine erste Kontaktseite 34, auf der ein erster flächiger Kontaktbereich 36 ausgebildet ist, beispielsweise in Form einer planen bzw. ebenen Fläche, und eine zweite Kontaktseite 38 mit einem zweiten flächigen Kontaktbereich 40, beispielsweise in Form einer planen bzw. ebenen Fläche.

Die Kontaktseiten 34, 38 sind entgegengesetzt zueinander am Kontaktkörper 22 vorgesehen. Zudem erstreckt sich zwischen den Kontaktseiten 34, 38 ein abgerundeter Randbereich 42.

Mit anderen Worten weist der Randbereich 42 eine Rundung 44 auf, die sich in der Ausgestaltung der Figur 1 von der ersten Kontaktseite 34 zur zweiten Kontaktseite 38 und zudem in Umfangsrichtung erstreckt. Hierdurch ergibt sich die Form des Kreistonnenkörpers des Kontaktkörpers 22.

Dementsprechend ist die gesamte nach außen weisende Fläche des Randbereichs 42 konvex ausgebildet.

Der Randbereich 42 umschließt sowohl den ersten Kontaktbereich 36 als auch den zweien Kontaktbereich 40 in radialer Richtung vollständig.

Alternativ kann der Kontaktkörper 22 auch nur als Kreiszylinder ausgebildet sein, wobei der Randbereich die Mantelfläche des zylindrischen Kontaktkörpers 22 bildet. Auch hier umschließt der Randbereich 42 sowohl den ersten Kontaktbereich 36 als auch den zweien Kontaktbereich 40 in radialer Richtung vollständig.

Figur 2 zeigt das an der Potentialausgleichsschiene 12 befestigte Kontaktsystem 14.

Dabei liegt der Kontaktkörper 22 mit dem zweiten Kontaktbereich 40 unmittelbar auf der Potentialausgleichsschiene 12 auf stellt somit einen elektrischen Kontakt zwischen dem Kontaktkörper 22 und der Potentialausgleichsschiene 12 her.

Der Flachleiter 16 ist zwischen dem Bügel 26 und dem Kontaktkörper 22 angeordnet und liegt auf der ersten Kontaktseite 34 des Kontaktkörpers 22 unmittelbar auf.

Dementsprechend wird über den ersten Kontaktbereich 36 der Kontaktkörper 22 mit dem Flachleiter 16 elektrisch kontaktiert und über den Kontaktkörper 22 ist auch ein elektrischer Kontakt zwischen dem Flachleiter 16 und der Potentialausgleichsschiene 12 hergestellt.

In der Ausgestaltung der Figuren 1 und 2 fixiert die Befestigungsvorrichtung 20 den Flachleiter 16 und den Kontaktkörper 22 kraftschlüssig an der Potentialausgleichsschiene 12.

Genauer gesagt ist der Bügel 26 über die Schrauben 24 an der Potentialausgleichsschiene 12 mechanisch fixiert und der Beaufschlagungsbereich 32 liegt unmittelbar auf dem Flachleiter 16 auf, sodass der Flachleiter 16 gegen den Kontaktkörper 22 und damit der Kontaktkörper 22 gegen die Potentialausgleichsschiene 12 gedrückt wird. Der Kontaktkörper 22 wird also kraftschlüssig an der Potentialausgleichsschiene 12 und der Leiter 16 kraftschlüssig am Kontaktkörper 22 fixiert.

Aufgrund der Rundung 44 des Randbereichs 42 fließt der Strom durch den Kontaktkörper 22 vor allem über die Mitte des Kontaktkörpers 22, also direkt von dem ersten Kontaktbereich 36 zum zweiten Kontaktbereich 38. Damit wird der Strom vom Randbereich 42 ferngehalten, sodass am Randbereich 42 des Kontaktkörpers 22 keine Funken entstehen können.

Daher kann der Flachleiter 16 mit einer geringeren Montagekraft an dem Kontaktkörper 22 befestigt werden. Auf diese Weise wird der Montageaufwand gegenüber den aus dem Stand der Technik bekannten Kontaktsystemen vereinfacht.

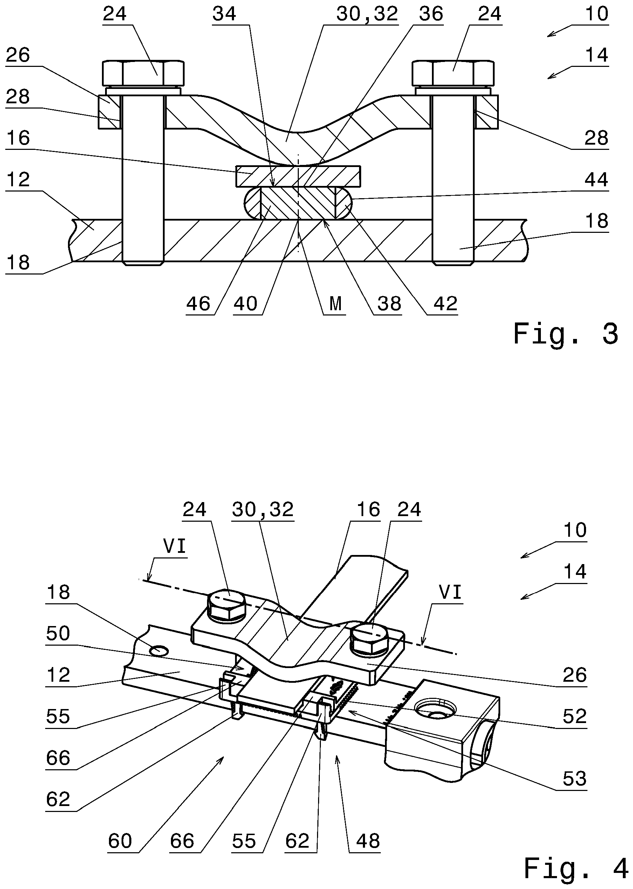

Anhand der Figuren 3 bis 12 werden im Folgenden weitere Ausführungsformen der Baugruppe 10 bzw. des Kontaktsystems 14 erläutert, die im Wesentlichen der Ausführungsform der Figuren 1 und 2 entsprechen. Gleiche und funktionsgleiche Bauteile sind mit denselben Bezugszeichen versehen und es wird im Folgenden lediglich auf die Unterschiede eingegangen.

Figur 3 zeigt eine zweite Ausführungsform des Kontaktsystems 14. Im Unterschied zur ersten Ausführungsform ist der Kontaktkörper 22 nicht einteilig ausgebildet, sondern zweiteilig.

Der Kontaktkörper 22 hat entsprechend den Randbereich 42 und eine Basis 46, die in radialer Richtung vollständig vom ringförmigen Randbereich 42 aufgenommen ist.

Dabei sind die Kontaktbereiche 36, 40 an entgegengesetzten Seiten der Basis 46 ausgebildet und der Randbereich 42 umgibt die Basis 46 entsprechend derart, dass nur noch die Kontaktbereiche 36, 40 von außen zugänglich sind, wie aus Figur 3 hervorgeht.

Die Basis 46 weist eine bessere elektrische Leitfähigkeit auf als der Randbereich 42. Auf diese Weise ist gewährleistet, dass der Strom vom Flachleiter 16 zur Potentialausgleichsschiene 12 vor allem bzw. hauptsächlich über die Basis 46 fließt. Dies liegt letztendlich daran, wie groß die Unterscheide hinsichtlich der elektrischen Leitfähigkeit sind. Somit hat der Randbereich 42 nur eine geringe Ladungsdichte, sodass am Kontaktkörper 22 keine Funken entstehen können.

Zum Beispiel ist die Basis 46 aus Kupfer oder Silber und der Randbereich 42 aus Edelstahl oder aus einem nicht leitfähigen Kunststoff.

Die Figuren 4 bis 8 zeigen eine dritte Ausführungsform der Baugruppe 10 bzw. des Kontaktsystems 14. Dabei ist der Kontaktkörper 22 wieder einteilig ausgeführt, also entsprechend der ersten Ausführungsform.

Im Unterschied zu den ersten beiden Ausführungsformen ist der Kontaktkörper 22 in einem Gehäuse 48 angeordnet, das mehrteilig ausgebildet ist.

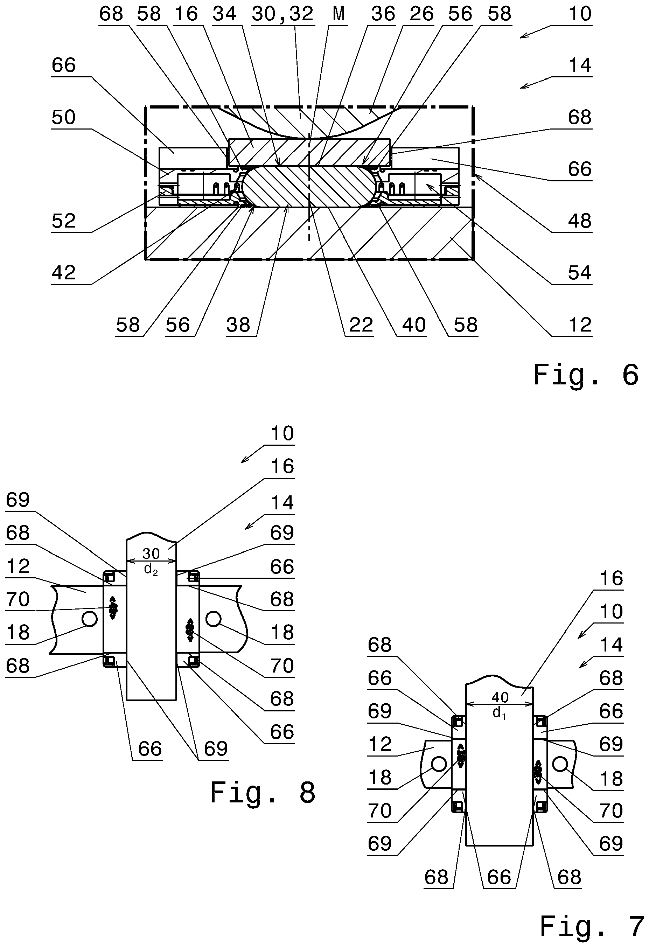

Genauer gesagt ist das Gehäuse 48 zweiteilig und besteht aus einem oberen Gehäuseteil 50 und einem unteren Gehäuseteil 52. Dabei ist innerhalb des Gehäuses 48 ein Hohlraum 54 ausgebildet (Figur 6).

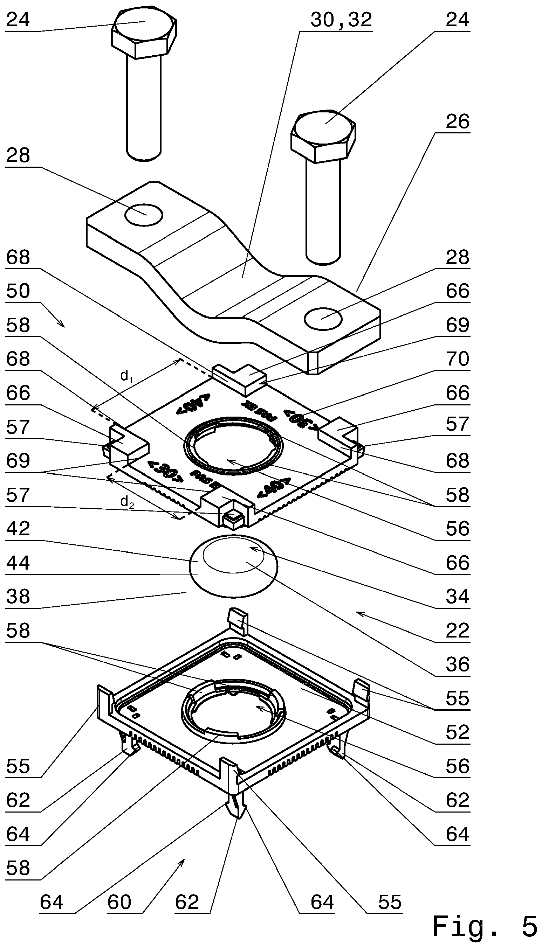

Die Gehäuseteile 50, 52 sind lösbar über eine Rastverbindung 53 miteinander verbunden. Am unteren Gehäuseteil 52 sind Rasthaken 55 ausgebildet, die an entsprechenden Rastabschnitten 57 (Figur 5) am oberen Gehäuseteil 50 angreifen, wodurch die Rastverbindung 54 der beiden Gehäuseteile 50, 52 hergestellt werden kann.

Jedes Gehäuseteil 50, 52 weist eine Kontaktierungsöffnung 56 auf und hat im Bereich der Kontaktierungsöffnungen 56 zudem Haltemittel 58, über die der Kontaktkörper 22 innerhalb des Gehäuses 48 gehalten ist.

Genauer gesagt ist der Kontaktkörper 22 innerhalb des Hohlraums 54 angeordnet und die Haltemittel58 greifen am Randbereich 42 des Kontaktkörpers 22 an.

Dabei ist der Kontaktkörper 22 innerhalb des Gehäuses 48 derart angeordnet, dass die Kontaktbereiche 36, 40 über die Kontaktierungsöffnungen 56 in den Gehäuseteilen 50, 52 zugänglich sind. Insofern kann eine elektrische Kontaktierung erfolgen, auch wenn der Kontaktkörper 22 im Gehäuse 48 aufgenommen ist.

Es wird bereits ein elektrischer Kontakt zwischen Kontaktkörper 22 und Potentialausgleichsschiene 12 oder Flachleiter 16 ausgebildet, wenn das Gehäuse 48 auf die Potentialausgleichsschiene 12 positioniert bzw. der Flachleiter 16 am Gehäuse 48 fixiert wird.

Am unteren Gehäuseteil 52 ist darüber hinaus eine Positioniervorrichtung 60 ausgebildet.

In der Ausführungsform der Figuren 4 bis 9 ist die Positioniervorrichtung 60 durch Rasthaken 62 gebildet, die jeweils zwei Vorsprünge 64 haben. Dabei sind die Vorsprünge 64 an jedem Rasthaken 62 um 90° zueinander versetzt.

Mittels der Positioniervorrichtung 60 kann das Gehäuse 48 mit dem aufgenommenen Kontaktkörper 22 an der Potentialausgleichsschiene 12 positioniert werden (Figur 4). In der an der Potentialausgleichsschiene 12 positionierten Stellung greifen die Vorsprünge 64 an der Kante der Potentialausgleichschiene 12 an, sodass sich das Gehäuse 48 mit dem aufgenommenen Kontaktkörper 22 noch entlang der Potentialausgleichsschiene 12 bewegen lässt, aber nicht von der Potentialausgleichsschiene 12 entfernt werden kann, ohne die Positioniervorrichtung 60 zu lösen.

Dadurch, dass an jedem Rasthaken 62 zwei Vorsprünge 64 ausgebildet sind, die um 90° zueinander versetzt sind, kann das Gehäuse 48 auch in zwei unterschiedlichen Orientierungen an der Potentialausgleichsschiene 12 mittels der Positioniervorrichtung 60 positioniert werden.

Die zwei unterschiedlichen Orientierungen sind dabei um 90° zueinander versetzt. Insofern interagiert in der ersten Orientierung der erste Vorsprung 64 eines Rasthakens 62 mit der Potentialausgleichsschiene 12, wohingegen in der zweiten Orientierung der zweite Vorsprung 64 des Rasthakens 62 mit der Potentialausgleichsschiene 12 interagiert.

Wie in Figur 5 gezeigt, hat das obere Gehäuseteil 50 mehrere Führungselemente 66, die von einer Oberseite des Gehäuses 48 hervorstehen, insbesondere von einer Oberseite des oberen Gehäuseteils 50. Über die Führungselemente 66 wird der Flachleiter 16 in einer bestimmten Position oberhalb des Kontaktkörpers 22 angeordnet und gleichzeitig geführt.

Genauer gesagt wird der Flachleiter 16 mittig oberhalb des Kontaktkörpers 22 positioniert.

An jedem Führungselement 66 ist jeweils eine erste Anlagefläche 68 und eine zweite Anlagefläche 69 ausgebildet, an denen der Flachleiter 16 im befestigten Zustand am Kontaktsystem 14 anliegt. Dies stellt sicher, dass der Flachleiter 16 geführt aufgenommen ist.

Die sich gegenüberliegenden ersten Anlageflächen 68 benachbarter Führungselemente 66 weisen dabei einen ersten Abstand d₁ zueinander auf und die sich gegenüberliegenden zweiten Anlageflächen 69 benachbarter Führungselemente 66 einen zweiten Abstand d₂.

In der Ausgestaltung der Figuren 4 bis 9 beträgt der erste Abstand d₁ 40 mm und der zweite Abstand d₂ 30 mm. Die Abstände d₁, d₂ sind dabei durch entsprechende Markierungen 70 auf der Oberseite des oberen Gehäuseteils 50 angegeben.

Da das Gehäuse 48 aufgrund der Positioniervorrichtung 60 in zwei Orientierungen an der Potentialausgleichsschiene 12 befestigt werden kann und der Abstand d₁, d₂ der Anlageflächen 68, 69 verschiedenen ist, können in den unterschiedlichen Orientierungen Flachleiter 16 mit unterschiedlichen Breiten sicher aufgenommen werden. Dies ist in den Figuren 7 und 8 gezeigt.

In Figur 7 ist das Gehäuse 48 in der ersten Orientierung an der Potentialausgleichsschiene 12 befestigt und ein Flachleiter 16 mit einer Breite von 40 mm zwischen den Führungselementen 66 aufgenommen. Der Flachleiter 16 liegt dabei an den ersten Anlageflächen 68 der Führungselemente 66 an.

In Figur 8 ist die Positioniervorrichtung 60 dann in der zweiten Orientierung an der Potentialausgleichsschiene 12 befestigt und entsprechend liegt ein Flachleiter 16 seitlich an den zweiten Anlageflächen 69 an.

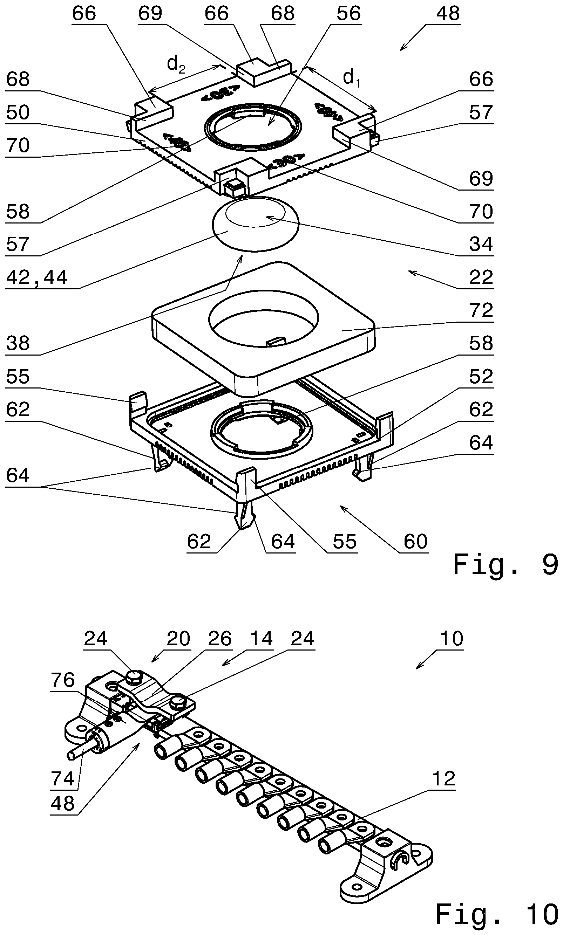

Figur 9 zeigt eine weitere Ausgestaltung des Gehäuses 48. In dieser Ausgestaltung ist im Hohlraum 54 des Gehäuses 48 zusätzlich ein poröser, elektrisch nicht leitfähiger Einsatz 72 aufgenommen, der den Kontaktkörper 22 im Randbereich umgibt.

Zum Beispiel ist der poröse Einsatz 72 aus einem offenporigen Kunststoff.

Durch den Einsatz 72 kann die Ausbreitung eines Funkens innerhalb des Hohlraums 54 zusätzlich verhindert werden. Hierdurch wird eine Redundanz geschaffen.

Anhand der Figuren 10 bis 12 wird im Folgenden eine vierte Ausführungsform der Baugruppe 10 bzw. des Kontaktsystems 14 erläutert. Im Unterschied zu den vorigen Ausführungsformen kann das Kontaktsystem 14 zusätzlich auch einen Rundleiter 74 an der Potentialausgleichsschiene 12 befestigen.

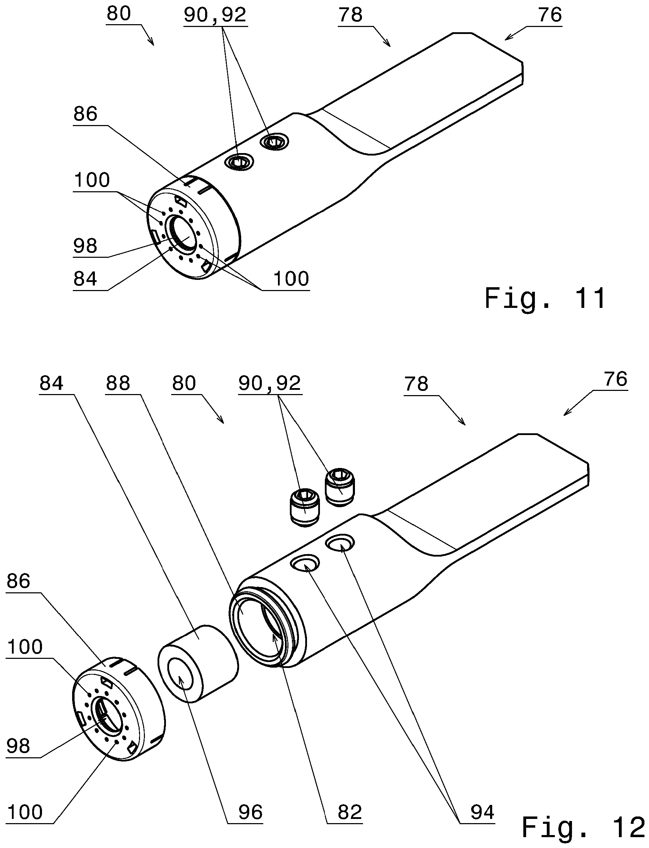

Hierfür hat das Kontaktsystem 14 einen Adapter 76, der im Detail in den Figuren 11 und 12 gezeigt ist.

Der Adapter 76 hat einen Kontaktierungsbereich 78 und eine Aufnahme 80, über die der Rundleiter 74 am Adapter 76 befestigt ist.

Im Kontaktierungsbereich 78 entspricht der Adapter 76 einem Flachleiter 16 und entsprechend ist der Adapter 76 im Kontaktierungsbereich 78 im Querschnitt rechteckig.

Der Adapter 76 wird über den Kontaktierungsbereich 78 am Gehäuse 48 befestigt, wobei der Adapter 76 über den Kontaktierungsbereich 78 und den Kontaktkörper 22 elektrisch leitend mit der Potentialausgleichsschiene 12 verbunden ist.

Die Aufnahme 80 weist eine Aufnahmekammer 82, einen elektrisch nicht leitfähigen, porösen Einsatz 84 und eine Abschlusskappe 86 auf.

Die Aufnahmekammer 82 hat eine Öffnung 88 auf einer Stirnseite des Adapters 76, wobei über die Öffnung 88 der Rundleiter 74 in die Aufnahmekammer 82 geführt und mittels Fixierungsmittel 90 in der Aufnahmekammer 82 fixiert wird.

In der Ausführungsform der Figuren 10 bis 12 sind die Fixierungsmittel 90 Schrauben 92, die in Fixieröffnungen 94 des Adapters 76 eingesetzt sind, beispielsweise Madenschrauben.

Die Fixierungsmittel 90 ragen in die Aufnahmekammer 82 hinein und drücken senkrecht zur Einsteckrichtung des Rundleiters 74 auf den Rundleiter 74. Auf diese Weise ist der Rundleiter 74 innerhalb des Adapters 76 fixiert. Dabei kontaktiert der Rundleiter 74 die Innenwand der Aufnahmekammer 82, sodass der Rundleiter 74 elektrisch leitend mit dem Kontaktierungsbereich 78 verbunden ist.

Der Einsatz 84 ist innerhalb der Aufnahmekammer 82 angeordnet und umfasst eine Durchgangsöffnung 96, die an den Querschnitt des Rundleiters 74 angepasst ist.

Der Durchmesser der Durchgangsöffnung 96 entspricht also im Wesentlichen dem Durchmesser des Rundleiters 74.

Der Rundleiter 74 wird über die Durchgangsöffnung 96 durch den Einsatz 84 geführt und auf diese Weise mit einem Ende innerhalb der Aufnahmekammer 82 positioniert.

Die Abschlusskappe 86 schließt die Aufnahmekammer 82 endseitig ab und ist an der Öffnung 88 lösbar befestigt, beispielsweise über eine entsprechende Rastverbindung oder aufgesteckt.

Die Abschlusskappe 86 weist eine Einstecköffnung 98, durch die der Rundleiter 74 geführt ist, und Belüftungsöffnungen 100 auf.

Dabei ist die Einstecköffnung 98 an den Querschnitt des Rundleiters 74 angepasst, sodass der Rundleiter 74 durch die Einstecköffnung 98 in die Aufnahmekammer 82 geführt werden kann (Figur 10).

Die Belüftungsöffnungen100 sind umfangsmäßig um die Einstecköffnung 98 angeordnet und über die Belüftungsöffnungen 100 kann aufgewärmte Luft nach außen entweichen.

Dementsprechend verbessern die Belüftungsöffnungen 100 den Wärmetransport aus der Aufnahmekammer 82 heraus.

Mit dem Kontaktsystem 14 der Figur 10 können also sowohl Rundleiter 74 als auch Flachleiter 16 mit der Potentialausgleichsschiene 12 elektrisch verbunden werden.

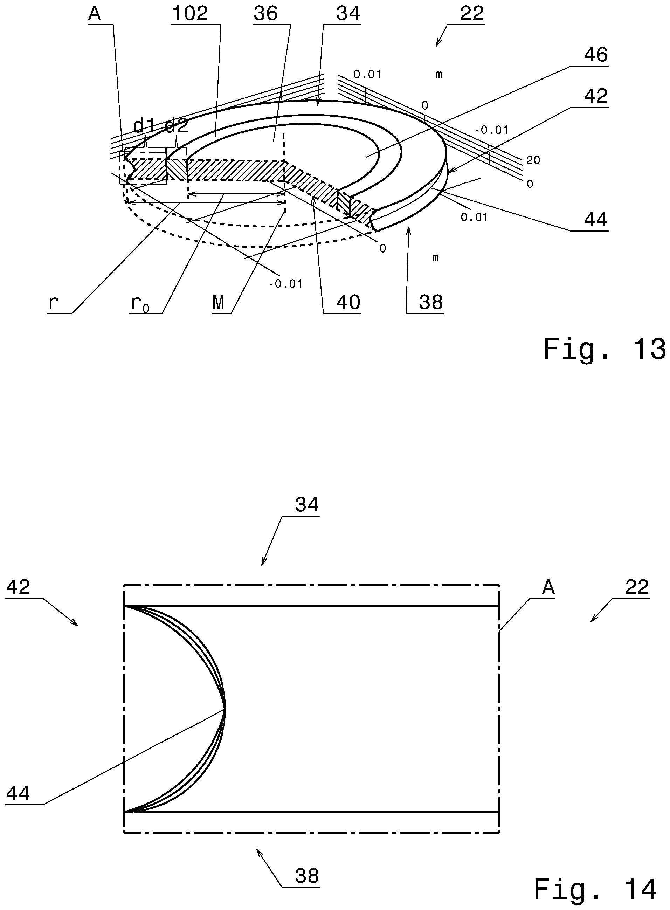

Anhand der Figuren 13 und 14 wird im Folgenden eine weitere Ausgestaltung des Kontaktkörpers 22 erläutert. Dabei ist in der Darstellung der Figur 13 ein Segment des Kontaktkörpers 22 ausgeschnitten. Dieses Segment ist in der Figur 13 durch gestrichelt dargestellte Linien angedeutet, wodurch die Gesamtgestaltung des Kontaktkörpers 22 verdeutlicht wird.

Insofern ist der Kontaktkörper 22 der Figuren 13 und 14 auch rotationssymmetrisch zur Mittelachse M des Kontaktkörpers 22 ausgebildet, von der ausgehend unterschiedliche Radien r und r₀ eingezeichnet sind, worauf noch eingegangen wird.

Im Unterschied zu den vorherigen Ausgestaltungen ist der Kontaktkörper 22 dreiteilig ausgeführt und weist zwischen der Basis 46 und dem Randbereich 42 ein ringförmiges Zwischenteil 102 auf, das über seine Innenseite, die zur Mittelachse M gewandt ist, die Basis 46 und mit seiner Außenseite den Randbereich 42 kontaktiert. Demnach ist das ringförmige Zwischenteil 102 in radialer Richtung zwischen Basis 46 und Randbereich 42 vollständig aufgenommen und in der äußeren Hälfte des Kontaktkörpers 22 angeordnet. Genauer gesagt ist das Zwischenteil 102 zwischen 60% und 75% des Radius r des Kontaktkörpers 22 angeordnet.

Dabei hat das Zwischenteil 102 eine Dicke d2 in radialer Richtung, die kleiner ist als die Dicke d1 des Randbereichs 42 in radialer Richtung. Zudem ist die Dicke d2 des Zwischenteils 102 kleiner als der Radius r₀ der Basis 46.

Außerdem weist das Zwischenteil 102 eine dritte elektrische Leitfähigkeit auf, die kleiner ist als die elektrische Leitfähigkeit der Basis 46 und größer als die elektrische Leitfähigkeit des Randbereichs 42. Auf diese Weise wird die Stromdichte im Randbereich 42 möglichst geringgehalten, wobei gleichzeitig Sprünge der elektrischen Leitfähigkeit verhindert sind.

Ein weiterer Unterschied des Kontaktkörpers 22 der Figuren 13 und 14 zu den vorherigen Ausgestaltungen liegt darin, dass sich die Rundung 44 bezogen auf die Mittelachse M des Kontaktkörpers 22 radial nach innen erstreckt. Insofern hat die Rundung 44 im Querschnitt der Figur 14 die Form einer Hyperbel. Die radial nach außen weisende Fläche des Randbereichs 42 ist also konkav ausgebildet. Anschaulich geht dies aus Figur 14 hervor.

Die unterschiedlichen Ausführungsformen zeigen demnach, dass sich die Rundung 44 entlang der Mittelachse M des Kontaktkörpers 22 erstrecken kann, sodass eine konvexe (Figuren 1 bis 3) oder konkave (Figuren 13 und 14) Fläche des Randbereichs 42 gebildet ist, die nach außen weist. Demnach weist der Randbereich des Kontaktkörpers 22 entlang der Mittelachse M die Rundung 44 auf bzw. ist der Kontaktkörper 22 in einer zur Mittelachse M parallelen Richtung abgerundet.

Zusätzlich zur Rundung 44 entlang der Mittelachse M kann der Kontaktkörper 22 auch in einer zur Mittelachse M senkrechten Richtung abgerundet sein, wie in allen Ausführungsformen gezeigt sind.

## Patentansprüche

1. Kontaktsystem (14) zur elektrischen Kontaktierung eines Leiters (16, 74) mit einer Potentialausgleichsschiene (12), das
einen elektrisch leitfähigen Kontaktkörper (22), und
eine Befestigungsvorrichtung (20) hat, die an der Potentialausgleichsschiene (12) befestigbar und dazu ausgebildet ist, den Leiter (16, 74) am Kontaktkörper (22) kraftschlüssig zu fixieren,
wobei der Kontaktkörper (22) eine erste Kontaktseite (34) mit einem ersten flächigen Kontaktbereich (36) und eine zweite Kontaktseite (38) mit einem zweiten flächigen Kontaktbereich (40) aufweist, wobei die beiden Kontaktseiten (34, 38) entgegengesetzt zueinander sind,
wobei der Kontaktkörper (22) über den ersten flächigen Kontaktbereich (36, 40) mit dem Leiter (16, 74) und über den zweiten flächigen Kontaktbereich (36, 40) mit der Potentialausgleichsschiene (12) kontaktierbar ist,
wobei der Kontaktkörper (22) zudem einen Randbereich (42) aufweist, der sich vom ersten Kontaktbereich (36) zum zweiten Kontaktbereich (40) erstreckt,
wobei der Randbereich (42) eine Rundung (44) aufweist, und
wobei das Kontaktsystem (14) ein Gehäuse (48) aufweist, in dem der Kontaktkörper (22) angeordnet ist, wobei das Gehäuse (48) im Bereich der Kontaktbereiche (36, 40) offen ist, sodass die Kontaktbereiche (36, 40) frei zugänglich sind, wobei der Kontaktkörper (22) mittels des Gehäuses (48) auf der Potentialausgleichsschiene (12) positionierbar ist,
**dadurch gekennzeichnet, dass**
am Gehäuse (48) wenigstens zwei Führungselemente (66) vorgesehen sind, die den Flachleiter (16) oder einen Adapter (76) relativ zum Kontaktkörper (22) positionieren, und/oder
am Gehäuse (48) eine Positioniervorrichtung (60) ausgebildet ist, über die das Gehäuse (48) auf der Potentialausgleichsschiene (12) positionierbar ist, wobei das Gehäuse (48) in zwei unterschiedlichen Orientierungen an der Potentialausgleichsschiene (12) anordbar ist, und wobei die unterschiedlichen Orientierungen zur elektrischen Anbindung von Leitern (16) mit unterschiedlichem Querschnitt dient.

2. Kontaktsystem (14) nach Anspruch 1, **dadurch gekennzeichnet, dass** der Randbereich (42) die Mantelfläche des im Wesentlichen zylindrischen Kontaktkörpers (22) bildet und/oder dass eine nach außen weisende Fläche des Randbereichs (42) konvex ausgebildet ist und/oder dass eine nach außen weisende Fläche des Randbereichs (42) konkav ausgebildet ist.

3. Kontaktsystem (14) nach Anspruch 1 oder 2, **dadurch gekennzeichnet, dass** der Kontaktkörper (22) eine Basis (46) und den Randbereich (42) aufweist, der ringförmig ausgebildet ist und die Basis (46) in radialer Richtung vollständig aufnimmt, wobei an der Basis (46) der erste Kontaktbereich (36) und der zweite Kontaktbereich (40) vorgesehen sind.

4. Kontaktsystem (14) nach Anspruch 3, **dadurch gekennzeichnet, dass** der Randbereich (42) aus einem Material ist, das eine geringere elektrische Leitfähigkeit aufweist als die Basis (46) des Kontaktkörpers (22).

5. Kontaktsystem (14) nach einem der vorhergehenden Ansprüche, **dadurch gekennzeichnet, dass** die Befestigungsvorrichtung (20) einen Bügel (26) aufweist, der Befestigungsöffnungen (28) hat, über die der Bügel (26) an der Potentialausgleichsschiene (12) befestigbar ist, wobei der Bügel (26) mittig einen Beaufschlagungsbereich (30) hat, über den der Leiter (16, 74) am ersten Kontaktbereich (36) fixierbar ist.

6. Kontaktsystem (14) nach einem der vorhergehenden Ansprüche, **dadurch gekennzeichnet, dass** das Kontaktsystem (14) ausgebildet ist, einen Flachleiter (16) elektrisch mit der Potentialausgleichsschiene (12) zu kontaktieren, und einen Adapter (76) für Rundleiter (74) aufweist, wobei der Adapter (76) eine Aufnahme (80) für den Rundleiter (74) hat, in die der Rundleiter (74) einsetzbar und befestigbar ist, und wobei der Adapter (76) einen im Querschnitt rechteckigen Kontaktierungsbereich (78) aufweist, der mittels der Befestigungsvorrichtung (20) mit dem Kontaktkörper (22) koppelbar ist.

7. Kontaktsystem (14) nach Anspruch 6, **dadurch gekennzeichnet, dass** die Aufnahme (80) eine Öffnung (88) an einer Stirnseite aufweist, die senkrecht zu wenigstens einer Fixierungsöffnung (94) ist, über die ein Fixierungsmittel (90) für den Rundleiter (74) eingesetzt ist, wobei das Fixierungsmittel (90) in eine Aufnahmekammer (82) hineinragt und über das der Rundleiter (74) fixierbar ist.

8. Kontaktsystem (14) nach Anspruch 7, **dadurch gekennzeichnet, dass** in der Aufnahme (80) ein elektrisch nicht leitfähiger, poröser Einsatz (84) angeordnet ist, der eine an den Querschnitt des Rundleiters (74) angepasste Durchgangsöffnung (96) hat.

9. Kontaktsystem (14) nach Anspruch 7 oder 8, **dadurch gekennzeichnet, dass** der Adapter (76) eine Abschlusskappe (86) aufweist, die werkzeugfrei lösbar an der Aufnahme (80) des Adapters (76) befestigt ist, wobei die Abschlusskappe (86) eine an den Querschnitt des Rundleiters (74) angepasste Einstecköffnung (98) aufweist.

10. Kontaktsystem (14) nach Anspruch 9, **dadurch gekennzeichnet, dass** die Abschlusskappe (86) zusätzliche Belüftungsöffnungen (100) aufweist.

11. Kontaktsystem (14) nach einem der vorhergehenden Ansprüche, **dadurch gekennzeichnet, dass** innerhalb des Gehäuses (48) ein Hohlraum (54) ausgebildet ist, in den der Kontaktkörper (22) eingesetzt ist, wobei der Kontaktkörper (22) über seinen Randbereich (42) verliersicher und positionsgetreu im Gehäuse (48) gehalten ist.

12. Kontaktsystem (14) nach einem der vorhergehenden Ansprüche, **dadurch gekennzeichnet, dass** das Gehäuse (48) mehrteilig ausgebildet ist und ein oberes Gehäuseteil (50) und ein unteres Gehäuseteil (52) aufweist.

13. Kontaktsystem (14) nach einem der vorhergehenden Ansprüche, **dadurch gekennzeichnet, dass** die Führungselemente (66) derart voneinander beabstandet sind, dass Flachleiter (16) oder Adapter (76) mit verschiedenen Breiten aufnehmbar sind.

14. Baugruppe (10) umfassend eine Potentialausgleichsschiene (12) und ein Kontaktsystem (14) nach einem der vorhergehenden Ansprüche.
